# EUROPÄISCHE PATENTSCHRIFT

(11) **EP 1 057 603 B1**
(45) Veröffentlichungstag und Bekanntmachung des Hinweises auf die Patenterteilung: **11.08.2004**
(21) Anmeldenummer: 00111524.5
(22) Anmeldetag: 30.05.2000
(51) Int. Cl.: B29B 7/46, B29B 7/48, B29B 7/88, B29B 7/84, B29C 47/10, B29C 47/38

(54) **Kontinuierliches Verfahren zur Extrusion von Kautschukpulvern**
Continuous process for extruding rubber powder
Procédé pour l'extrusion de la poudre de caoutchouc

(30) Priorität: 01.06.1999 DE 19925246
(43) Veröffentlichungstag der Anmeldung: 06.12.2000
(73) Patentinhaber: PKU Pulverkautschuk Union GmbH, 45764 Marl (DE)
(72) Erfinder: Görl, Udo, Dr., 45657 Recklinghausen (DE); Skibba, Olaf, 30657 Hannover (DE); Uphus, Reinhard, Dr., 30419 Hannover (DE); Stober, Reinhard, Dr., 63594 Hasselroth (DE); Lauer, Hartmut, 63628 Bad Soden Salmünster (DE)

(56) Entgegenhaltungen:
- EP-A- 0 512 303
- EP-A- 0 611 078
- US-A- 4 046 849
- US-A- 4 607 797
- US-A- 5 358 693
- US-A- 5 711 904
- US-A- 5 758 961

## Beschreibung

Die Erfindung betrifft Zweischneckenextruder, geeignet zur Extrusion von pulverförmigem oder granuliertem Kautschuk mit einer Schneckenkonfiguration, in der auf die dispersiv mischenden in Verarbeitungsrichtung die distributiv mischenden Elemente folgen, und ein Verfahren zur Extrusion von vulkanisierbären Kautschukmischungen.

In der Kunststoff und Kautschuk verarbeitenden Industrie gibt es seit langem Anstrengungen, die üblichen Mischprozesse zu vereinfachen.

Kautschuk wird normalerweise in Ballenform angeliefert und muß so verarbeitet werden.

Die für die Herstellung einer vulkanisierbaren Mischung notwendigen Bestandteile, insbesondere die in hohen Mengen enthaltenen Füllstoffe, müssen in zeit- und energieaufwendigen Schritten in den Kautschuk eingearbeitet werden, um zu den gewünschten Mischungen zu gelangen.

Ein Mischverfahren, das die übliche Verwendung von Knetern vermeidet, wird in der US-PS 5,711,904 beschrieben.

Nach diesem Verfahren wird Kautschuk zum Beispiel durch das allerdings engergieintensive Mahlen in eine feinteilige Form überführt und anschließend unter Zusatz von Füllstoffen und weiteren für die Herstellung einer vulkanisierbaren Mischung notwendigen Verbindungen in einem Doppelschneckenextruder extrudiert.

Dieser enthält dispersiv und distributiv wirkende Mischelemente in miteinander abwechselnder Folge, ohne daß die Anwesenheit der temperaturempfindlichen Verbindungen berücksichtigt wird.

Der Mengendurchsatz ist aufgrund der Temperaturentwicklung bei erhöhter Drehzahl, insbesondere im dispersiven

Mischbereich, und der daraus resultierenden Gefahr des Anvulkanisierens der Mischung als unbefriedigend einzustufen.

Bei der US-PS 5 711 904 wird der Weichmacher immer auf den schon plastifizierten Kautschuk dosiert, wodurch hier entsprechende Schneckenelemente eingesetzt werden müssen, um die Einarbeitung sicherzustellen. Durch diese Mischelemente wird zusätzlich Wärme in die Mischung eingebracht, so dass es fraglich ist, ob durch die spätere Eindosierung des Weichmachers ein Absenken der Massetemperatur möglich ist.

EP 0 512 303 beschreibt eine Vorrichtung zur Herstellung von Kautschukgrund- und Fertigmischungen. Die Vorrichtung enthält einen Zweischneckenextruder zur Vermischung der Elastomer-Komponenten in verschiedenen Mischzonen bei bestimmten Temperaturen.

US 5 358 693 beschreibt ein Verfahren und eine Vorrichtung zur einstufigen, kontinuierlichen Herstellung einer Kautschukgrund- und Fertigmischung für Gummiartikel in einer Mischvorrichtung bei 100 bis 160 °C.

US 5 758 961 beansprucht eine Vorrichtung zum Herstellen einer Gummizusammensetzung, mit einer Mischkammer, die mindestens einen Rotor aufweist, der sich in einem Stator dreht und sich zwischen einem flussaufwärts gelegenen Ende und einem flussabwärts gelegenen Ende erstreckt, zwischen welchen das Material fortlaufend voranschreitet, um die Zusammensetzung durch das gesamte flussabwärts gelegene Ende abzugeben mit Organen zur Dosierung und zwangsweise Einleitung des oder der Grundelastomere.

Gegenstand der Erfindung ist ein einstufiges kontinuierliches Verfahren zum Mischen und Extrudieren von vulkanisierbaren Kautschukmischen unter Verwendung eines Zweischneckenextruders, dadurch gekennzeichnet, dass man
a) pulverförmigen Kautschuk, gegebenenfalls weitere Füllstoffe und weitere nicht vernetzend wirkende Verarbeitungshilfsmittel sowie Weichmacheröl und 3 bis 6 % Wasser, bezogen auf das Kautschukpulver, wobei das Wasser zusammen mit dem Kautschuk oder vor oder während des dispersiven Mischens zugegeben wird, in den Extruder eindosiert,
b) diese Bestandteile in einer dispersen Mischzone mischt, anschließend
c) in eine Wärmeabfuhrzone fördert, die bevorzugt eine Dosier- und Entlüftungsvorrichtung enthält,
d) dort oder in der distributiven Mischzone die vernetzend wirkenden Vulkanisationshilfsmittel eindosiert und
e) in der distributiven Mischzone einmischt und
f) nach einem durch geeignete Förderprofile erfolgten Druckaufbau in der gewünschten Form extrudiert.

Füllstoffe und die weiteren Verarbeitungshilfsmittel müssen nur dann zusätzlich eingemischt werden, wenn ein sie nicht enthaltendes Kautschukpulver verwendet wird.

Mit Hilfe des erfindungsgemäßen Verfahrens gelingt es, vulkanisierbare Kautschukmischungen mit einem erhöhten Anstoß herzustellen.

Der im disersiven Mischteil aufgrund der erhöhten Drehzahl möglicherweise auftretende Temperaturanstieg auf ca. 60 bis 110 °C, insbesondere bis 100 °C, ist gemäß dem vorliegenden Verfahren unproblematisch, da die Mischung an dieser Stelle noch keine vernetzend wirkenden Bestandteile enthält.

Das Weichmacheröl wird bevorzugt auf den pulverförmigen, insbesondere füllstoffhaltigen Kautschuk, in den üblichen Mengen aufgebracht.

Dies ist von Vorteil, da nach der Überführung in die plastifizierte Form das Weichmacheröl nur noch schwer von dem Kautschuk aufgenommen wird.

Außerdem herrscht an dieser Stelle noch ein druckloser Zustand, so daß ein Verstopfen der Dosierdüse nicht eintritt.

Das erfindungsgemäße Verfahren ermöglicht, die Herstellung von Extrudaten, in denen der eingesetzte Füllstoff (zum Beispiel Ruß und/oder Kieselsäure) homogen verteilt vorliegt und keine Blasenbildung erfolgt.

Insbesondere in der dispersiven Mischzone wird durch die Kneterelemente Wärme in die Mischung eingetragen, die zu Temperaturspitzen führen kann.

Üblicherweise aufgewandte notwendige Kühlenergie kann man dadurch begrenzen, daß man gleichzeitig mit dem pulverförmigen oder granulierten Kautschuk, auf jeden Fall vor oder während des dispersiven Mischens, Wasser in einer Menge von insbesondere 3 bis 6 %, bezogen auf das Kautschukpulver, eindosiert.

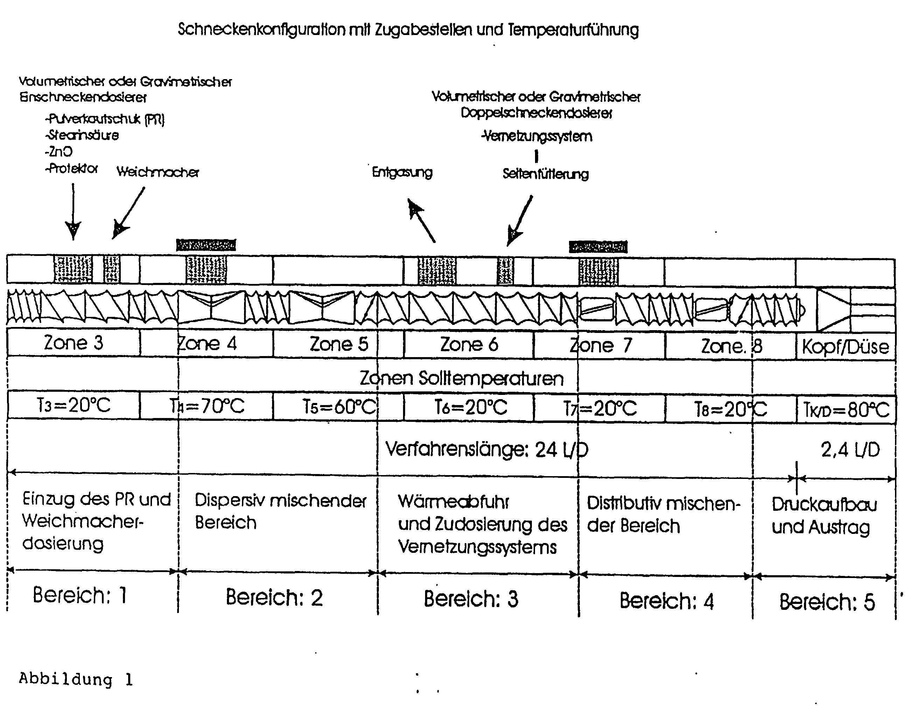

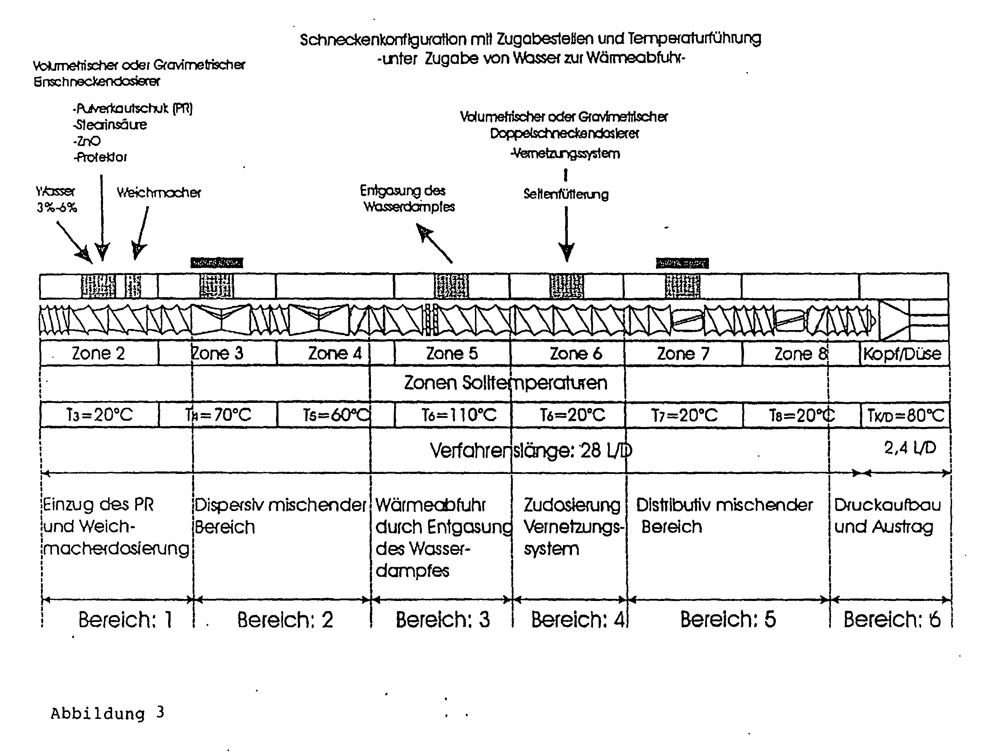

Hierdurch verlängert sich im allgemeinen die Verfahrenslänge zum Beispiel von 24 L/D auf 28 L/D (siehe Abbildung 1 und Abbildung 3).

Der infolge der Erwärmung der Mischung entstehende Wasserdampf wird ebenso wie weitere Ausgasungen des Kautschuks in der Kühl- und Dosierzone oder später abgezogen.

Es zeigt sich, daß der beschriebene Wasserzusatz zu einer deutlichen Absenkung der Temperatur im Extruder führt, ohne daß von außen Kühlenergie zugeführt werden muß.

Diese Variante ist von besonderer Bedeutung für Extruder mit großem Querschnitt, bei denen die Wärme nur unter großem Aufwand abzuführen ist.

Mit Hilfe des erfindungesgemäßen Verfahrens ist es ebeneso möglich, Extrudate in der für die Anwendung gewünschten Form, zum Beispiel Laufstreifen für Reifen, zu gewinnen.

Für diesen Fall wird der Extruder bevorzugt mit zum Beispiel einer Zahnradpumpe gekoppelt und das Produkt in der gewünschten Form extrudiert und nach dem Stand der Technik weiterverarbeitet, das heißt vulkanisiert.

Bevorzugt verarbeitet werden Kautschukpulver, enthaltend einen oder mehrere oxidische(n) oder bevorzugt silikatische(n) Füllstoff(e), insbesondere eine gefällte Kieselsäure, in einer Menge 20 phr bis 250 phr, wenn es sich um einen synthetischen Füllstoff dieser Art handelt, oder in einer Menge von 20 phr bis 300 phr, wenn es sich um einen natürlichen Füllstoff handelt, deren Oberfläche mit einer oder mehreren Organosiliciumverbindungen der allgemeinen Formeln

[ R¹ ₙ(RO)₃₋ₙ Si-(Alk)ₘ -(Ar)ₚ ] _{q} [B] (I),

R¹ ₙ (RO)₃₋ₙ Si-(Alkyl) (II),

oder

R¹ ₙ (RO)₃₋ₙ Si-(Alkenyl) (III)

in einer Menge von 0,5 bis 20 Gew.-%, bezogen auf den Füllstoff, modifiziert ist,
in denen bedeuten
- B:: -SCN, -SH -Cl, NH₂ (wenn q = 1) oder -Sx- (wenn q = 2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
- R:: eine C₁-C₄-Alkyl, -C₁-C₄-Alkoxygruppe, verzweigt oder nicht verzweigt,
- n:: 0; 1 oder 2,
- Alk:: eine zweiwertigen geraden oder verzweigten Kohlenwasserstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, daß p, m und n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen,
und/oder Ruße in einer Menge 20 phr bis 250 phr, wobei die Gesamtmenge der Füllstoffe 300 phr nicht überschreitet.

Die erfindungsgemäß eingesetzten Kautschukpulver enthalten bevorzugt eines oder mehrere der Verarbeitungs- oder Vulkanisationshilfsmittel
Zinkoxid,
Zinkstearat,
Stearinsäure,
Polyalkohole,
Polyamine,
Weichmacher,
Alterungsschutzmittel gegen Wärme, Licht oder Verstärkerharze,
Flammschutzmittel (Al(OH)₃, Mg(OH)₂),
in den gummitechnisch üblichen Konzentrationen, oder diese werden vor oder während des dispersiven Mischens zugesetzt.

Eingesetzt werden im allgemeinen Kautschukpulver mit einem Kornspektrum von 25 µm bis 3000 µm oder in granulierter Form von 2 bis 10 mm.

Die erfindungsgemäß bevorzugt eingesetzten feinteiligen füllstoffhaltigen Kautschuke (Kautschukpulver) werden zum Beispiel durch Ausfällen aus wasserhaltigen Mischungen, die Füllstoff in Form von Suspensionen, eine wässrige Emulsionen eines Kautschuks (Polymers) oder eine Kautschuklösung enthalten, durch Zusatz von wasserlöslichen Salzen eines Metalls, ausgewählt aus den Gruppen II a, II b, III a und VIII des periodischen Systems, gewonnen, wobei man zum Beispiel
a) zunächst aus einer silikatischen Verbindung und/oder Rußen und Wasser eine Füllstoffsuspension mit einer Suspensionsdichte zwischen 0,5 - 10%, insbesondere zwischen 5 - 7 % bezogen auf den Feststoff unter Rühren herstellt, gegebenenfalls die Feststoffteilchen zuvor mittels eines geeigneten Mahlwerkes heruntermahlt (deagglomeriert), gegebenenfalls zusätzlich Wasserstoffbrückenbildende Verbindungen wie Polyalkohole oder polyvalente Amine in Mengen von 0,5 - 10 Teilen, bezogen auf 100 Teile des Füllstoffs, zur Suspension hinzufügt, und gegebenenfalls die Suspension auf Temperaturen im Bereich zwischen 25 - 95 °C erwärmt,
b) anschließend, wenn die Suspension silikatische Füllstoffe enthält, eine oder mehrere Organosiliciumverbindung(en) gemäß den Formeln (I) bis (III), die mindestens eine Alkoxygruppe enthalten, in Wasser gelöst oder direkt oder gegebenenfalls in Anwesenheit einer oberflächenaktiven Substanz in Wasser emulgiert, mit der genannten wässrigen Suspension dieses Füllstoffs oder dessen Mischung mit einem Ruß bei einer Temperatur von 10 bis 60 °C, bevorzugt bei Raumtemperatur, unter Rühren vermischt,
c) diese so hergestellte Suspension mit dem Polymerlatex, der Polymeremulsion oder der Polymerlösung vermischt, den pH-Wert dieser Mischung mit einer Säure oder der wäßrigen Lösung eines der oben genannten Salze, insbesondere einer Lewissäure, gegebenenfalls in zwei Schritten und unter Aufteilung des zugesetzten Füllstoffs auf einen pH-Wert von 7 bis 3 absenkt und den in der Mischung befindlichen Kautschuk zusammen mit den gegebenenfalls durch die genannten Organosiliciumverbindungen modifizierten Füllstoffen ausfällt.
d) das ausgefallene füllstoffhaltige Kautschukpulver mit an sich bekannten Maßnahmen abtrennt, gegebenenfalls säurefrei wäscht,
e) den so erhaltenen Füllstoff trocknet und gegebenenfalls granuliert.

Man setzt der Suspension des Füllstoffs, gegebenenfalls nach deren Vermischen mit dem Polymer (Kautschuk), aber vor dem Fällvorgang (Punkt c) vorteilhaft eines oder mehrere der Verarbeitungs- oder Vulkanisationshilfsmittel
Zinkoxid,
Zinkstearat,
Stearinsäure,
Polyalkohole,
Polyamine,
Weichmacher,
Alterungsschutzmittel gegen Wärme, Licht oder Verstärkerharze,
Flammschutzmittel (Al(OH)₃, Mg(OH)₂),
in den gummitechnisch üblichen Konzentrationen zu.

Dabei kann es sich auch um Vormischungen handeln.

Die eingesetzten natürlichen oder gefällten oxidischen oder silikatischen Füllstoffe, auch als Gemisch von zwei oder mehreren dieser Füllstoffe, sind an sich in der Kautschuktechnologie bekannte Füllstoffe. Wesentliche Voraussetzung für ihre Eignung ist das Vorhandensein von OH-Gruppen an der Oberfläche der Füllstoffteilchen, die mit den Alkoxygruppen der Organosiliciumverbindungen reagieren können. Es handelt sich um oxidische und silikatische Füllstoffe, die mit Kautschuken verträglich sind, und die für diese Verwendung notwendige und bekannte Feinteiligkeit aufweisen.

Als natürliche Silikate sind besonders Kaoline oder Clays geeignet. Aber auch Kieselgur oder Diatomeenerde können eingesetzt werden.

Als oxidische Füllstoffe sind beispielhaft zu nennen Aluminiumoxid, Aluminiumhydroxid oder -trihydrat und Titandioxid.

"Modifizierte Füllstoffe" bedeutet in diesem Zusammenhang, daß die Organosilanverbindungen entweder durch chemische Umsetzung (OH-Gruppen) oder adsorptiv an die Oberfläche gebunden sind.

Die adsorptiv gebundenen Gruppen werden spätestens durch den Trocknungsschritt in chemisch gebundene umgewandelt.

Die Emulsion oder Lösung wird in derartigen Mengen mit der Füllstoffsuspension vermischt, daß die Konzentration der Organosiliciumverbindung 0,5 bis 20 Gew.-%, bevorzugt 5 bis 12 Gew.-%, bezogen auf die Füllstoffmenge beträgt. Die modifizierten Füllstoffe enthalten 0,5 bis 20 Gew.-%, bevorzugt 0,5 bis 12 Gew.-%, der Organosiliciumverbindungen, bezogen auf den trockenen Füllstoff.

Sie sind besonders geeignet zur Verwendung in vulkanisierund formbaren Kautschukmischungen.

Man setzt in dem Herstellverfahren vorteilhaft einen salzfrei gewaschenen Filterkuchen aus der Kieselsäurefällung ein.

Geeignet sind auch Suspensionen, wie man sie bei der Aufarbeitung von natürlichen Füllstoffen wie Clays erhält.

Man spart so gegenüber dem Stand der Technik einen energieaufwendigen Trocknungsschritt.

Die eingesetzten Kieselsäuren sind aus dem Kautschuksektor bekannt.

Sie besitzen im allgemeinen eine nach der bekannten BET-Methode bestimmte N₂-Oberfläche von 35 bis 700 m²/g, eine CTAB-Oberfläche von 30 bis 500 m²/g, eine DBP-Zahl von 150 bis 400 ml/100g.

Handelt es sich um weiße Naturfüllstoffe, wie Clays oder Kieselkreiden mit einer N₂-Oberfläche von 2 bis 35 m²/g setzt man diese bevorzugt in einer Menge von 20 bis 300 Teile, bezogen auf 100 Teile Kautschuk, ein.

Herstellbar sind auch füllstoffhaltige Kautschukpulver, die silikatischen Füllstoffe, insbesondere Kieselsäuren, und Ruße im Gemisch oder nur Ruße enthalten. Die Gesamtmenge an Füllstoff kann hierbei zwischen 20 bis 300 phr, insbesondere bis 200 phr, liegen. Der Anteil an Kieselsäure beläuft sich, wenn sie vorhanden ist, im allgemeinen auf 20 phr bis 250 phr.

Im allgemeinen wird Ruß mit 20 bis 250 phr eingesetzt.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 m²/g, einer CTAB-Zahl von 15 bis 600 m²/g, einer DBP-Adsorption von 30 bis 400 ml/100 g und einer 24 M4 DBP-Zahl von 50 bis 370 ml/100 g.

Als Kautschuktypen einsetzbar und als wässrige Emulsionen darstellbar haben sich folgende Spezies gezeigt, einzeln oder im Gemisch miteinander:

Naturkautschuk, Emulsions-SBR mit einem Styrolanteil von 10 bis 50 %, Butyl-Acrylnitril-Kautschuk.

Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Besonders geeignet sind BR, Emulsions- und Lösungs-SBR.

Bei nach Lösungsmittelverfahren hergestellten Polymerisaten sind bei der Verarbeitung besondere Vorsichtsmaßnahmen wegen des Lösungsmittelgehalts zu treffen.

Neben den genannten Kautschuken kommen folgende Elastomere, einzeln oder im Gemisch, in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z.B. epoxidierte Typen. Die erfindungsgemäßen Kautschukpulver besitzen im allgemeinen eine Teilchengröße von 25 µm bis 3000 µm, insbesondere von 500 µm bis 1000 µm, und können neben den bereits genannten Füllstoffen gegebenenfalls in der Kautschuk verarbeitenden Industrie bekannte Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon, Verstärkerharze, Flammschutzmittel wie z.B. Al(OH)₃ und Mg(OH)₂ , Pigmente, in den gummitechnisch üblichen Konzentrationen enthalten. Diese werden bevorzugt der Füllstoffe enthaltenden Suspension vor dem Ausfällen des Kautschukpulvers zugesetzt, natürlich unter Berücksichtigung ihrer pH-Stabilität.

Es gelingt erfindungsgemäß, feinteilige mit Organosiliciumverbindungen modifizierte silikatische Füllstoffe und/oder Ruß enthaltende Kautschukpulver herzustellen. Insbesondere die silanisierte Kieselsäure enthaltenden Pulverkautschuke zeichnen sich durch hohe Lagerstabilität aus, sind ohne nennenswerte Abspaltung von Alkohol leicht verarbeitbar und führen zu ausgezeichneten gummitechnischen Wertebildern der unter ihrer Verwendung hergestellten Vulkanisate.

Mit Hilfe des erfindungsgemäßen Verfahren erhält man Extrudate mit einer höchst gleichmäßigen Verteilung der Feststoffe, insbesondere der Füllstoffe, in der Polymermatrix.

Messungen der Verteilung erfolgen nach dem Verfahren zur Bestimmung der Mischgüte von H. Geisler aus dem Deutschen Institut für Kautschuktechnologie in Hannover.

Aufgrund der Aufteilung in distributive und dispersive Mischzonen gelingt es, auch Kautschuktypen mit einer höheren Viskosität als zum Beispiel EPDM mit erhöhtem Durchsatz zu extrudieren, ohne ein Anvulkanisieren fürchten zu müssen.

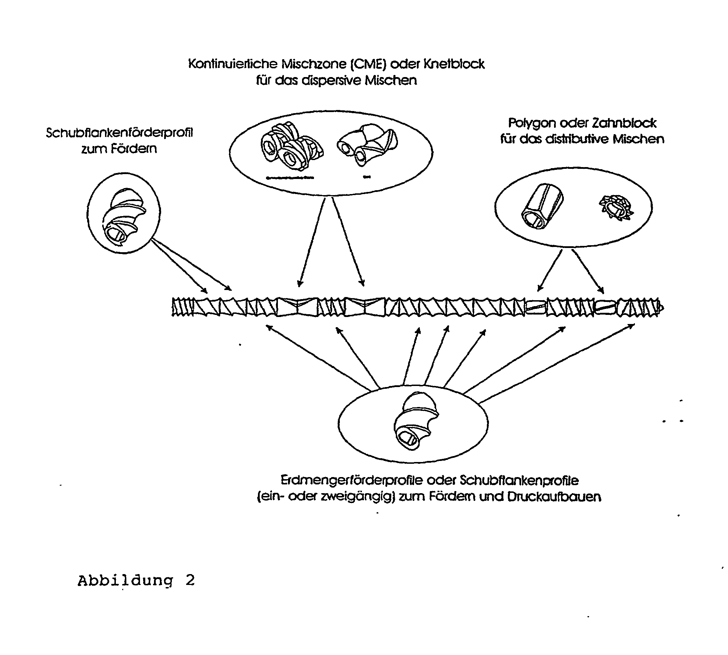

Die Abbildungen 1 bis 3 geben Schneckenkonfigurationen und die für die Durchführung des Verfahrens eingesetzte Knetund Förderelemente beispielhaft wieder.

Die angegebenen Temperaturen sind als circa-Werte zu verstehen.

## Patentansprüche

1. Einstufiges, kontinuierliches Verfahren zum Mischen und Extrudieren von Kautschukpulvern unter Verwendung eines Zweischneckenextruders,
**dadurch gekennzeichnet,**
**dass** man
a) pulverförmigen Kautschuk, gegebenenfalls weitere Füllstoffe und weitere nicht vemetzend wirkende Verarbeitungshilfsmittelsowie Weichmacheröl und 3 bis 6 % Wasser, bezogen auf das Kautschukpulver, wobei das Wasser zusammen mit dem Kautschuk oder vor oder während des dispersiven Mischens zugegeben wird, in den Extruder eindosiert,
b) diese Bestandteile in einer dispersiven Mischzone mischt, anschließend
c) in eine Wärmeabfuhrzone fördert, die bevorzugt eine Dosier- und eine Entlüftungsvorrichtung enthält,
d) dort oder in der distributiven Mischzone die vernetzend wirkenden Vulkanisationshitftmittel eindosiert und
e) in der distributiven Mischzone vermischt und
f) nach einem durch geeignete Förderprofile erfolgten Druckaufbau in der gewünschten Form extrudiert.

2. Verfahren gemäß Anspruch 1,
**dadurch gekennzeichnet,**
**dass** der Zweischneckenextruder als dispersiv mischende Elemente eine oder mehrere kontinuierliche Mischzonen (CME) und/oder Knetblöcke und als distributiv mischende Elemente einen oder mehrere Polygon (e) und/oder Zahnblöcke enthält.

3. Verfahren gemäß Anspruch 1,
**dadurch gekennzeichnet,**
**dass** man gleichzeitig mit dem pulverförmigen Kautschuk oder vor der distributiven Mischzone Wasser in den Extruder eindosiert und den beim Mischen entstehenden Wasserdampf bevorzugt in der Wärmeabfuhrzone abführt.

4. Verfahren gemäß einem oder mehreren der vorhergehenden Ansprüche,
**dadurch gekennzeichnet,**
**dass** man den Zweischneckenextruder mit weiteren Aggregaten kombiniert und ein Extrudat mit der gewünschen Ausformung erhält.

5. Verfahren gemäß einem oder mehreren der vorhergehenden Ansprüche,
**dadurch gekennzeichnet,**
**dass** man Kautschukpulver, enthaltend einen oder mehrere oxidische(n) oder bevorzugt silikatische(n) Füllstoffe(e), insbesondere eine gefällte Kieselsäure, in einer Menge 20 phr bis 250 phr, wenn es sich um einen synthetischen Füllstoff dieser Art handelt, oder in einer Menge von 20 phr bis 300 phr, wenn es sich um einen natürlichen Füllstoff handelt, deren Oberfläche mit einer oder mehreren Organosiliciumverbindungen der allgemeinen Formeln
[R¹ ₙ(RO)₃₋ₙ Si-(Alk)ₘ -(Ar)ₚ ] _{q} [B] (I),
R¹ ₙ (RO)₃₋ₙ Si-(Alkyl) (II),
oder
R¹ ₙ (RO)₃₋ₙ Si-(Alkenyl) (III)
in einer Menge von 0,5 bis 20 Gew.-%, bezogen auf den Füllstoff, modifiziert ist, in denen bedeuten
B: -SCH, -SH -Cl, NH₂ (wen q = 1) oder -Sx- (wenn q = 2)
R und R¹: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
R: eine C₁-C₄-Alkyl, -C₁-C₄-Alkoxygruppe, verzweigt oder nicht verzweigt,
n: 0; 1 oder 2,
Alk: eine zweiwertigen geraden oder verzweigten Kohlenwasserstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p, m und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen,
und/oder Ruße in einer Menge 20 phr bis 250 phr, wobei die Gesamtmenge der Füllstoffe 300 phr nicht überschreitet, extrudiert.

6. Verfahren gemäß einen der vorhergehenden Ansprüche,
**dadurch gekennzeichnet,**
**dass** man Kautschukpulver gemeinsam mit einem oder mehreren der Verarbeitungs- oder Vulkanisationshilfsmittel
Zinkoxid,
Zinkstearat,
Stearinsäure,
Polyalkohole,
Polyamine,
Weichmacher,
Alterungsschutzmittel gegen Wärme, Licht oder Verstärkerharze,
Flammschutzmittel (Al(OH)₃, Mg (OH)₂),
in den gummitechnisch üblichen Konzentrationen in der dispersiven Mischzone extrudiert.

7. Verfahren gemäß einem oder mehreren der vorhergehenden Ansprüche,
**dadurch gekennzeichnet,**
**dass** man mit einem Kornspektrum von 25 µm bis 3000 µm oder in granuliertem Form von 2 bis 10 mm vorliegendes Kautschukpulver extrudiert.

## Claims

1. A single-stage, continuous process for the mixing and extruding of rubber powders, using a twin-screw extruder,
**characterized in that**
a) pulverulent rubber, and, if desired, fillers and non-crosslinking processing aids, and also plasticizer oil and from 3 to 6% of water, based on the rubber powder, are metered into the extruder, the water being added together with the rubber or prior to or during the dispersive mixing process,
b) these constituents are mixed in a dispersive mixing zone, and then
c) are conveyed into a heat-dissipation zone, which preferably contains a metering apparatus and a deaerating apparatus, and
d) there or in the distributive mixing zone the crosslinking vulcanizing auxiliaries are metered in, and
e) mixing takes place in the distributive mixing zone, and
f) after pressure has been increased by suitable conveying profiles, extrusion takes place in the desired form.

2. A process according to claim 1,
**characterized in that**
the twin-screw extruder contains, as dispersive mixing elements, one or more continuous mixing zones (CME) and/or kneading blocks, and, as distributive mixing elements, one or more polygons and/or toothed blocks.

3. A process according to claim 1,
**characterized in that**
water is metered into the extruder simultaneously with the pulverulent rubber or upstream of the distributive mixing zone, and the steam produced during the mixing process is preferably dissipated in the heat dissipation zone.

4. A process according to one or more of the preceding claims,
**characterized in that**
the twin-screw extruder is combined with other assemblies, and an extrudate with the desired shape is obtained.

5. A process according to one or more of the preceding claims,
**characterized in that**
rubber powder is extruded, containing one or more oxidic or preferably silicatic fillers, in particular a precipitated silica, in an amount of from 20 phr to 250 phr, if use is made of a synthetic filler of this type, or in an amount of from 20 phr to 300 phr, if use is made of a naturally occurring filler, the surface of the materials having been modified with one or more organosilicon compounds of the general formulae
[R¹ ₙ(RO)₃₋ₙSi-(Alk)ₘ-(Ar)ₚ]_{q}[B] (I),
R¹ ₙ(RO)₃₋ₙSi-(alkyl) (II),
or
R¹ ₙ(RO)₃₋ₙSi-(alkenyl) (III)
in an amount of from 0.5 to 20% by weight, based on the filler,
where
B: is -SCH, -SH, -Cl, NH₂ (if q = 1), or -Sₓ (if q = 2),
R and R¹: are an alkyl group having from 1 to 4 carbon atoms, branched or unbranched, or the phenyl radical, and each of the radicals R and R¹ here may be identical or different, preferably an alkyl group,
R: is a C₁-C₄-alkyl or C₁-C₄-alkoxy group, branched or unbranched,
n: is 0; 1 or 2,
Alk: is a divalent straight-chain or branched hydrocarbon radical having from 1 to 6 carbon atoms,
m: is 0 or 1,
Ar: is an arylene radical having from 6 to 12 carbon atoms,
p: is 0 or 1, with the proviso that p, m and n are not simultaneously 0,
x: is a number from 2 to 8,
Alkyl: is a monovalent straight-chain or branched saturated hydrocarbon radical having from 1 to 20 carbon atoms, preferably from 2 to 8 carbon atoms,
Alkenyl: is a monovalent straight-chain or branched unsaturated hydrocarbon radical having from 2 to 20 carbon atoms, preferably from 2 to 8 carbon atoms,
and/or containing carbon blacks in an amount of from 20 phr to 250 phr, the total amount of the fillers here not exceeding 300 phr.

6. A process according to any one of the preceding claims,
**characterized in that**
rubber powder is extruded together with one or more of the following processing or vulcanizing auxiliaries:
zinc oxide,
zinc stearate,
stearic acid,
polyalcohols,
polyamines,
plasticizers,
agents to counteract ageing due to heat or light, or reinforcing resins,
flame retardants (Al(OH)₃, Mg(OH)₂),
in the concentrations conventional in rubber technology in the dispersive mixing zone.

7. A process according to one or more of the preceding claims,
**characterized in that**
a rubber powder is extruded having a grain size range of from 25 µm to 3000 µm or, in pelletized form, from 2 to 10 mm.

## Revendications

1. Procédé continu à une étape permettant le mélange et l'extrusion de poudres de caoutchouc en utilisant une extrudeuse à deux vis,
**caractérisé en ce que**
a) on introduit, par doses, dans l'extrudeuse, du caoutchouc pulvérulent, le cas échéant d'autres charges et d'autres adjuvants n'ayant pas d'action réticulante ainsi que de l'huile plastifiante et 3 à 6 % d'eau, par rapport à la poudre de caoutchouc, l'eau étant ajoutée conjointement au caoutchouc ou avant ou pendant le mélange dispersif,
b) on mélange ces constituants dans une zone de mélange dispersif, puis
c) on les achemine dans une zone de dissipation de la chaleur qui contient de préférence un dispositif de dosage et un dispositif d'aération,
d) on ajoute par doses à cet endroit ou dans la zone de mélange distributive les auxiliaires de vulcanisation à action réticulante,
e) on mélange dans la zone de mélange distributive et
f) on extrude sous la forme souhaitée après la génération d'une pression réalisée par des profils d'acheminement appropriés.

2. Procédé selon la revendication 1,
**caractérisé en ce que**
l'extrudeuse à deux vis comporte comme élément de mélange dispersif, une ou plusieurs zones de mélange continues (CME) et/ou des blocs de malaxage et, en tant qu'élément de mélange distributif, un ou plusieurs polygone(s) et/ou blocs dentés.

3. Procédé selon la revendication 1,
**caractérisé en ce que**
on introduit, dans l'extrudeuse, par doses, de l'eau en même temps que le caoutchouc pulvérulent ou avant la zone de mélange distributive et on évacue la vapeur d'eau apparaissant lors du mélange, de préférence dans la zone d'évacuation de la chaleur.

4. Procédé selon l'une quelconque ou plusieurs des revendications précédentes,
**caractérisé en ce que**
on combine l'extrudeuse à deux vis avec d'autres ensembles pour obtenir un extrudat ayant la forme souhaitée.

5. Procédé selon l'une quelconque ou plusieurs des revendications précédentes,
**caractérisé en ce que**
on extrude de la poudre de caoutchouc contenant une ou plusieurs charge(s) oxydique(s) ou de préférence silicatique(s), en particulier un acide silicique précipité, dans une quantité de 20 phr à 250 phr, lorsqu'il s'agit d'une charge synthétique de ce type, ou dans une quantité de 20 phr à 300 phr, lorsqu'il s'agit d'une charge naturelle, dont la surface est modifiée avec une quantité de 0,5 à 20 % en poids, par rapport à la charge, d'un ou plusieurs composés de silicium organique de formules générales
[R¹ ₙ(RO)₃₋ₙ Si-(Alk)ₘ - (Ar)ₚ]_{q} [B] (I),
R¹ ₙ(RO)₃₋ₙ Si-(alkyle) (II),
ou
R¹ ₙ (RO)₃₋ₙ Si-(alcényle) (III)
dans lesquelles
B : représente -SCH, -SH -CI, NH₂ (si q = 1) ou - Sx- (si q = 2)
R et R¹ : un groupe alkyle portant 1 à 4 atomes de carbone, ramifié ou non ramifié, le radical phényle, tous les radicaux R et R¹ pouvant avoir la même signification ou une signification différente, de préférence un groupe alkyle,
R : un groupe alkyle en C₁ à C₄, un groupe alcoxy en C₁ à C₄ ramifié ou non ramifié,
n : 0; 1 Ou 2,
Alk : un radical hydrogène bivalent linéaire ou ramifié portant 1 à 6 atomes de carbone,
m: 0 ou 1
Ar : un radical arylène portant 6 à 12 atomes de C
p : 0 ou 1 à condition que p, m et n ne signifient pas en même temps 0,
x : un nombre de 2 à 8,
Alkyle : un radical hydrogène monovalent saturé linéaire ou ramifié portant 1 à 20 atomes de carbone, de préférence 2 à 8 atomes de carbone,
Alcényle : un radical hydrogène monovalent insaturé linéaire ou ramifié portant 2 à 20 atomes de carbone, de préférence 2 à 8 atomes de carbone,
et/ou des suies dans une quantité de 20 phr à 250 phr, la quantité totale de charges ne dépassant pas 300 phr.

6. Procédé selon l'une quelconque des revendications précédentes,
**caractérisé en ce que**
on extrude la poudre de caoutchouc dans la zone de mélange dispersif conjointement à un ou plusieurs adjuvants ou auxiliaires de vulcanisation :
oxyde de zinc,
stéarate de zinc,
acide stéarique,
polyalcools,
polyamines,
plastifiants,
agents anti-vieillissement contre la chaleur, la lumière ou des résines de renforcement,
des agents pare-flammes (Al (OH)₃, Mg (OH)₂),
dans les concentrations usuelles pour le caoutchouc.

7. Procédé selon l'une quelconque ou plusieurs des revendications précédentes,
**caractérisé en ce que**
on extrude la poudre de caoutchouc présente avec un spectre de grains de 25 µm à 3000 µm ou sous forme granulée de 2 à 10 mm.
